# EUROPÄISCHE PATENTSCHRIFT

(11) **EP 1 546 572 B1**
(45) Veröffentlichungstag und Bekanntmachung des Hinweises auf die Patenterteilung: **03.01.2007**
(21) Anmeldenummer: 03757885.3
(22) Anmeldetag: 23.09.2003
(51) Int. Cl.: F16D 66/00, F16D 55/224

(54) **BREMSZUSPANNEINRICHTUNG MIT SCHWERKRAFTMESSBOLZEN**
BRAKE TENSIONING DEVICE COMPRISING SHEARING FORCE MEASURING BOLT
DISPOSITIF DE SERRAGE DE FREIN A BOULON DE MESURE DE FORCE DE CISAILLEMENT

(30) Priorität: 27.09.2002 DE 10245207
(43) Veröffentlichungstag der Anmeldung: 29.06.2005
(73) Patentinhaber: KNORR-BREMSE Systeme für Schienenfahrzeuge GmbH, 80809 München (DE)
(72) Erfinder: WAGNER, Thomas, 81373 München (DE); FRIESEN, Ulf, 81739 München (DE); STALTMEIR, Josef, 80807 München (DE)
(86) Internationale Anmeldenummer: PCT/EP2003/010553
(87) Internationale Veröffentlichungsnummer: WO 2004/031607

(56) Entgegenhaltungen:
- EP-A- 0 283 947
- WO-A-02/064990

## Beschreibung

Die Erfindung geht aus von einer Bremszuspanneinrichtung, insbesondere für eine Schienenfahrzeugbremse, nach der Gattung des Patentanspruchs 1.

### Stand der Technik

Aus der EP 0 283 947 A2 ist eine Bremszuspanneinrichtung für Schienenfahrzeugbremse bekannt, mit einem Bremsaktuator zum Zuspannen und/oder Lösen der Bremse und mit einem Kraftumsetzer zur Umsetzung der vom Bremsaktuator abgegebenen Energie in eine Bremszuspannbewegung, wobei der Kraftumsetzer einen im Kraftfluß angeordneten, mit wenigstens einem Meßaufnehmer zur mittelbaren oder unmittelbaren Bremskraftmessung versehenen Scherkraftmeßbolzen beinhaltet, welcher einen Durchgangsöffnungen von wenigstens zwei, gegeneinander verschwenkbaren Kraftübertragungselementen des Kraftumsetzers durchragenden Gelenkbolzen eines Gelenks bildet. Am Scherkraftmeßbolzen findet demzufolge eine Gleitbewegung unter nicht unbeträchtlichen Bremskräften statt. Infolgedessen tritt an dem den Meßaufnehmer tragenden und deshalb in der Herstellung und Montage aufwendigen Scherkraftmeßbolzen mit der Zeit Verschleiß auf, was einen kostspieligen Austausch erforderlich macht.

Die gattungsbildende WO 02064990 zeigt eine Brenszuspanneinrichtung gemäss dem Oberbegriff des Anspruchs 1.

Der vorliegenden Erfindung liegt demzufolge die Aufgabe zugrunde, eine elektromechanische Bremszuspanneinrichtung der eingangs erwähnten Art zu schaffen, bei welcher der Scherkraftmeßbolzen eine höhere Lebensdauer aufweist.

Erfindungsgemäß wird diese Aufgabe durch die Merkmale von Anspruch 1 gelöst.

### Vorteile der Erfindung

Die größte Scherbelastung des Scherkraftmeßbolzens ist im Bereich der Stoßebenen der Kraftübertragungselemente vorhanden. Hierbei werden die axialen Randbereiche der Buchse auf Biegung belastet. Wegen der radial inneren Randausnehmungen sind die axialen Randbereiche der Buchse nachgiebiger als die hieran angrenzenden Bereiche, wodurch hohe Kantenpressungen zwischen Buchse und Scherkraftmeßbolzen vermieden werden. Die hieraus resultierende Vergleichmäßigung der Spannungen wirkt sich positiv auf das Tragbild der aus Buchse und Scherkraftmeßbolzen bestehenden Gleitpaarung aus. Wegen der niedrigeren Kantenpressung wird schließlich die Belastung des in der Fertigung und Montage relativ teuren Scherkraftmeßbolzens reduziert und somit dessen Lebensdauer erhöht.

Durch die in den Unteransprüchen aufgeführten Maßnahmen sind vorteilhafte Weiterbildungen und Verbesserungen der im Patentanspruch 1 angegebenen Erfindung möglich.

Gemäß einer besonders zu bevorzugenden Ausführungsform der Erfindung ist die Buchse in der Durchgangsöffnung drehfest gehalten, wobei die Buchse mit dem Scherkraftmeßbolzen eine Gleitpaarung bildet und derart ausgebildet ist, daß sie im Hinblick auf Verschleißbedingungen wie Härte, Oberflächenrauhigkeit, Material etc. den eher zu Verschleiß neigenden Gleitpartner bildet. Hierzu kann insbesondere das Material der Buchse relativ weich und das des Scherkraftmeßbolzens einsprechend hart gewählt werden. Folglich findet der mit der Zeit auftretende Verschleiß in der kostengünstigen und leicht auswechselbaren Buchse anstatt am ungleich teureren Scherkraftmeßbolzen statt.

Gemäß einer Weiterbildung wird der tragende Bereich der radial äußeren Umfangsfläche des Scherkraftmeßbolzens durch eine zylindrisch glatte Fläche ohne Einstiche oder Stufen gebildet. Dies wirkt sich wegen fehlender Kerben günstig auf die Dauerfestigkeit des als Gelenkbolzen wirkenden Scherkraftmeßbolzens aus. Außerdem ist der Scherkraftmeßbolzen hierdurch einfacher und kostengünstiger zu fertigen.

Eine bevorzugte Maßnahme sieht vor, daß der Scherkraftmeßbolzen einen endseitigen, im Durchmesser vergrößerten Bolzenkopf aufweist, in welchem eine Sensorsignal-Auswerteelektronik aufgenommen ist. Folglich bildet der Scherkraftmeßbolzen ein komplettes Meßmodul, welches einer Bremskraftregelung Signale liefern kann. Damit kann der Scherkraftmeßbolzen als in sich geschlossenes Meßmodul in den Regelkreis beliebiger Bremszuspanneinrichtungen integriert werden, was die Montage, den Austausch oder die Umrüstung stark vereinfacht. Insbesondere weist der Scherkraftmeßbolzen dann nur eine standardisierte Schnittstelle auf, welche auch von Nicht-Fachkräften an eine Bremskraftregeleinrichtung angeschlossen werden kann.

In besonders bevorzugender Weise sind Meßaufnehmer, eine Anschlußverkabelung für die Sensorsignal-Auswerteelektronik sowie die Sensorsignal-Auswerteelektronik selbst jeweils redundant vorgesehen. Damit wird eine erhöhte Zuverlässigkeit der Meßanordnung erzielt, außerdem ist eine Plausibilitätsprüfung durch Vergleich der Meßsignale zweier oder mehrerer Meßkreise möglich.

### Zeichnungen

Ein Ausführungsbeispiel der Erfindung ist in den Zeichnungen dargestellt und in der nachfolgenden Beschreibung näher erläutert. Es zeigen :
- Fig.1: eine Schnittdarstellung einer bevorzugten Ausführungsform einer Bremszuspanneinrichtung mit einem integrierten Scherkraftmeßbolzen;
- Fig.2: eine Schnittdarstellung des Scherkraftmeßbolzens von Fig.1 entlang der Linie 11-11.

### Beschreibung des Ausführungsbeispiels

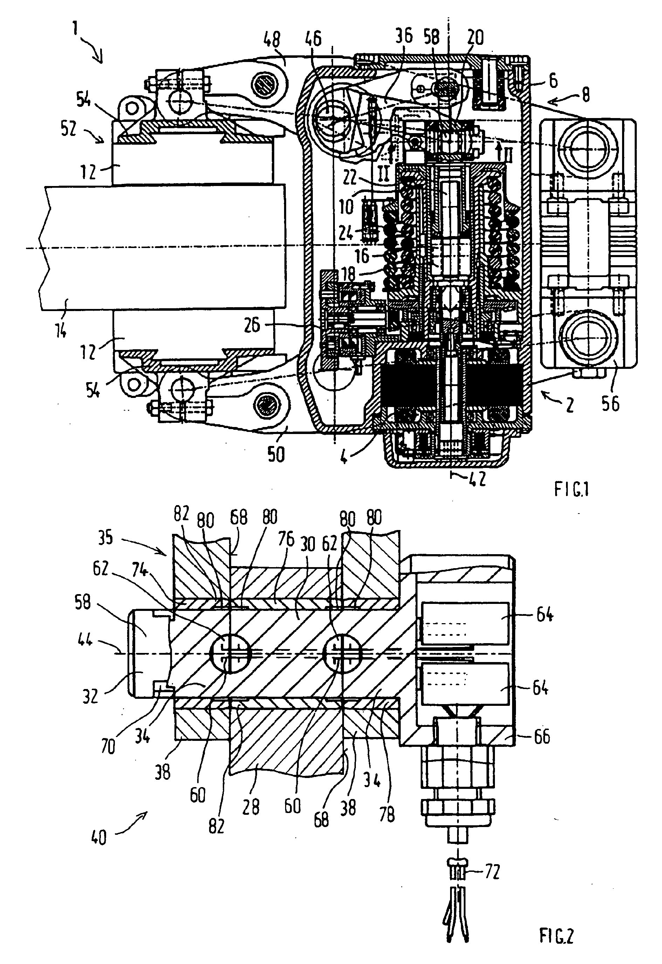

Die in Fig.1 insgesamt mit 1 bezeichnete, vorzugsweise elektromechanische Bremszuspanneinrichtung ist für ein Schienenfahrzeug vorgesehen und beinhaltet einen Bremsaktuator 2 mit einer Betriebsbremseinheit und einer Speicherbremseinheit. Die Betriebsbremseinheit hat einen elektrischen Antrieb, beispielsweise einen elektrischen Stellmotor 4, der in einem Aktuatorgehäuse 6 des Bremsaktuators 2 untergebracht ist. Ein mechanischer Kraftumsetzer 8 dient zur Umsetzung der vom Bremsaktuator 2 abgegebenen Energie in eine Bremszuspannbewegung.

Der Stellmotor 4 versetzt eine koaxiale Bremsspindel 10 in Drehung, welche durch den Kraftumsetzer 8 in eine Bremszuspannbewegung von Bremsbelägen 12 in Richtung auf eine Bremsscheibe 14 gewandelt werden. Der Kraftumsetzer 8 umfaßt unter anderem eine Spindel/Mutter-Baueinheit 16 mit einer auf der Bremsspindel 10 drehbar gelagerten Spindelmutter 18, welche bei Drehung der Bremsspindel 10 Linearbewegungen in Richtung der Spindelachse ausführen kann. Das vom Stellmotor 4 abgewandte Ende der Bremsspindel 10 ragt in einen zylindrischen Hohlabschnitt eines Pleuels 20 hinein, der mit der Spindelmutter 18 axialfest verbunden ist. Außerdem ist der zylindrische Hohlabschnitt des Pleuels 20 in einer Schiebehülse 22 axialfest gehalten, gegen welche wenigstens eine sich am Aktuatorgehäuse 6 abstützende Speicherfeder 24 in Bremslösestellung vorgespannt ist. Die Speicherfeder 24 ist Teil der Speicherbremseinheit und dient als Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Sowohl die Betriebs- als auch die Speicherbremseinheit wirken auf den Pleuel 20. Die Speicherfeder 24 ist durch eine Verriegelungseinrichtung 26 in der vorgespannten Stellung gehalten.

Ein plattenförmiger Pleuelkopf 28 des Pleuels 20 ragt aus der Schiebehülse 22 heraus und ist mit einem Pleuelauge 30 versehen. Wie insbesondere aus Fig.2 hervorgeht, durchragt ein Gelenkbolzen 32 das Pleuelauge 30 sowie hierzu koaxiale Durchgangsbohrungen 34 von das Pleuelauge 30 axial umgreifenden, an einer endseitigen Gabel 35 eines Bremshebels 36 ausgebildeten Wangen 38. Die Wangen 38 des Bremshebels 36, der Pleuelkopf 28 und der Gelenkbolzen 32 bilden zusammen ein Gelenk 40 des Kraftumsetzers 8, wodurch der Bremshebel 36 am Pleuel 20 senkrecht zur Spindelachse 42 angelenkt ist. Bei Antrieb der Bremsspindel 10 in Bremszuspannrichtung bzw. bei Lösen der Verriegelungseinrichtung 26 der Speicherfeder 24 wird aufgrund des dann axial ausfahrenden Pleuels 20 der Gelenkbolzen 32 unter anderem durch im wesentlichen senkrecht zur Bolzenachse 44 angreifende Scherkräfte beansprucht, während sich der Bremshebel 36 gegenüber dem Pleuel 20 verdreht.

Das andere Ende des Bremshebels 36 wirkt auf eine Exzenteranordnung mit einer Exzenterwelle 46, die an einen Zangenhebel 48 angelenkt ist, der zusammen mit einem weiteren Zangenhebel 50 eine Bremszange 52 bildet. An den einen Enden der Zangenhebel 48, 50 sind jeweils Belaghalter 54 mit Bremsbelägen 12 angeordnet, die in Richtung der Achse der Bremsscheibe 14 verschieblich sind. Die von den Bremsbelägen 12 abgewandt liegenden Enden der Zangenhebel 48, 50 sind miteinander über einen Druckstangensteller 56 verbunden, der vorzugsweise elektrisch betätigt ausgelegt ist. Die beschriebene Anordnung bildet ebenfalls einen Teil des Kraftumsetzers 8, der die vom Stellmotor 4 oder von der Speicherfeder 24 veranlaßten Ausfahrbewegungen des Pleuels 20 in eine Bremszuspannbewegung der Bremsbeläge 12 in Richtung auf die Bremsscheibe 14 wandelt.

Wie aus Fig.2 hervorgeht, wird der Gelenkbolzen 32 des Gelenks 40 durch einen Scherkraftmeßbolzen 58 gebildet. Der Scherkraftmeßbolzen 58 ist mit wenigstens einem Meßaufnehmer 60 zur Messung von Größen versehen, aus welchen die an den Bremsbelägen 12 wirkende Bremskraft mittelbar oder unmittelbar ableitbar ist. In bevorzugter Ausführungsform wird der Meßaufnehmer durch Kraftmeßzellen 60 in Dünnfilmtechnik gebildet, welche beispielsweise in senkrecht zur Bolzenachse 44 verlaufenden Querbohrungen 62 aufgenommen und dort vorzugsweise laserverschweißt sind. Die Querbohrungen 62 befinden sich im Bereich der von senkrecht zur Bolzenachse 44 verlaufenden, radialen Stoßebenen 68 des Pleuelkopfes 28 mit den Wangen 38 der Gabel 35 des Bremshebels 36 und somit im Bereich von Scherebenen des bei Betätigung des Bremsaktuators 2 durch gegenläufige Kräfte auf Scherung beanspruchten Scherkraftmeßbolzens 58. Die Kraftmeßzellen 60 erzeugen aufgrund der mit gegensinnig wirkenden Scherkräften hervorgerufenen elastischen Scherverformungen des Scherkraftmeßbolzens 58 proportionale Signale und liefern diese an eine Sensorsignal- Auswerteelektronik 64.

Alternativ kann anstatt der Kraftmeßzellen 60 jegliche andere Art von Meßaufnehmer verwendet werden, mit welchen die im Betrieb auftretenden elastischen Verformungen des Scherkraftmeßbolzens 58 meßbar sind, so beispielsweise Druckmeßumformer, die vorzugsweise nach kapazitivem, piezoelektrischem oder piezoresistivem Prinzip arbeiten.

Der Scherkraftmeßbolzen 58 hat einen endseitigen, im Durchmesser vergrößerten Bolzenkopf 66, in welchem die Sensorsignal-Auswerteelektronik 64 untergebracht ist, vorzugsweise dadurch, daß sie in den Bolzenkopf 66 eingegossen ist, wodurch eine schwingungsdämpfende oder schwingungsentkoppelte Aufnahme gegeben ist. Bei Verwendung von Dehnmeßstreifen als Meßelement 60 beinhaltet die Auswertelektronik 64 beispielsweise eine DMS-Brückenverstärkerschaltung. Die Dehnmeßstreifen bilden beispielsweise eine vollständige oder zumindest halbe Meßbrücke aus. Das Signal dieser Meßbrücke wird durch die Auswerteelektronik 64 verstärkt und aufbereitet. Die Dehnmeßstreifen sind vorzugsweise in einer axialen Bohrung des Scherkraftmeßbolzens gehalten.

Im Montagezustand schlägt die obere Wange 38 des Bremshebels 36 an einer stirnseitigen Ringfläche des Bolzenkopfes 66 axial an. Das vom Bolzenkopf 66 weg weisende Ende des Scherkraftmeßbolzens 58 hat eine quer zur Bolzenachse 44 verlaufende Außennut 70 zur Aufnahme eines lagesichernden Sprengrings, so daß die Wangen 38 der Gabel 35 des Bremshebels 36 am Pleuelkopf 28 des Pleuels 20 spielbehaftet anliegen können und es in den Stoßebenen 68 zu Relativbewegungen kommen kann. In ihrem tragenden, d.h. die Wangen 38 und das Pleuelauge 30 aufnehmenden Bereich bildet die radial äußere Umfangsfläche des Scherkraftmeßbolzens 58 eine zylindrisch glatte Fläche ohne Einstiche oder Stufen.

In der Sensorsignal-Auswertelektronik 64 findet eine Umrechnung der Scherverformungssignale in Signale für die jeweils an den Bremsbelägen 12 wirkende Ist-Bremskraft statt, welche an eine nicht dargestellte Steuerungs- und Regelungseinrichtung weitergeleitet werden, um anhand eines Soll-Ist-Vergleichs eine gewünschte Soll-Bremskraft einregeln zu können. Darüber hinaus dienen die empfangenen Signale für die Ist-Bremskräfte zur Überwachung der Krafteinsteuerung und Funktionsfähigkeit der Bremszuspanneinrichtung 1 bei sicherheitsrelevanten Bremsungen. Zur Verifizierung der Meßergebnisse kann außerdem der antriebsseitig durch einen Stromsensor gemessene Motorstrom mit dem Signal für die Ist-Bremskraft abgeglichen werden. Vorzugsweise sind die Meßaufnehmer 60, eine Anschlußverkabelung 72 für die Sensorsignal-Auswerteelektronik 64 sowie die Sensorsignal-Auswerteelektronik 64 selbst jeweils in redundanter Ausführung vorgesehen. Weiterhin sind die redundant vorhandenen Anschlußverkabelungen 72 jeweils mit einer eigenen Abschirmung versehen.

Im Pleuelauge 30 des Pleuelkopfes 28 und in den Durchgangsbohrungen 34 der Wangen 38 der Gabel 35 des Bremshebels 36 sind vorzugsweise je eine zylindrische Buchse 74, 76, 78 drehfest gehalten, beispielsweise durch Einpressen. Jede der Buchsen 74, 76, 78 bildet mit dem Scherkraftmeßbolzen 58 eine Gleitpaarung, wobei die Relativbewegung an den radial inneren Umfangsflächen der Buchsen 74, 76, 78 stattfindet. Die Buchsen 74, 76, 78 sind vorzugsweise derart ausgebildet, daß sie im Hinblick auf Verschleißbedingungen wie Härte, Oberflächenrauhigkeit, Material etc. gegenüber dem Scherkraftmeßbolzen 58 den eher zu Verschleiß neigenden Gleitpartner bilden. Vorzugsweise bestehen die Buchsen 74, 76, 78 aus einem Sintermetall, beispielsweise aus einer Sinterbronze und der Scherkraftmeßbolzen 58 aus gehärtetem Stahl. Solche Sintermetalle können bis zu 35 % ihres Volumens an Öl aufnehmen und durch Kapillarwirkung ihre Gleitfläche selbst schmieren.

Wie aus Fig.2 hervorgeht, weisen die Buchsen 74, 76, 78 im wesentlichen die gleiche axiale Länge wie die sie tragenden Durchgangsbohrungen 34 bzw. wie das Pleuelauge 30 auf und sind mit radial inneren Randausnehmungen 80 versehen, welche beispielsweise umlaufend ringförmig ausgebildet sind und im wesentlichen einen Rechteckquerschnitt aufweisen. Alternativ können die Randausnehmungen 80 jegliche andere Form aufweisen. Folglich sind die radial inneren Randausnehmungen 80 einander zugewandt und im Bereich der beiden radialen Stoßebenen 68 der Wangen 38 mit dem Pleuelkopf 28 und damit in den Ebenen angeordnet, in welchen auch die Querbohrungen 62 mit den Meßaufnehmern 60 liegen. Die größte Scherbelastung des Scherkraftmeßbolzens 58 ist im Bereich dieser Stoßebenen 68 vorhanden, wobei hierbei, wie anhand von Fig.2 leicht vorstellbar ist, die axialen Randbereiche 82 der Buchsen 74, 76, 78 auf Biegung belastet werden. Wegen der radial inneren Randausnehmungen 80 sind die Randbereiche 82 der Buchsen 74, 76, 78 nachgiebiger als die angrenzenden Bereiche, wodurch hohe Kantenpressungen vermieden werden. Die hieraus resultierende Vergleichmäßigung der Spannungen wirkt sich positiv auf das Tragbild der aus Buchsen 74, 76, 78 und Scherkraftmeßbolzen 58 bestehenden Gleitpaarungen aus.

### Bezugszahlenliste

- 1: Bremszuspanneinrichtung
- 2: Bremsaktuator
- 4: Stellmotor
- 6: Aktuatorgehäuse
- 8: Kraftumsetzer
- 10: Bremsspindel
- 12: Bremsbelag
- 14: Bremsscheibe
- 16: Spindel-Mutter-Baueinheit
- 18: Spindelmutter
- 20: Pleuel
- 22: Schiebehülse
- 24: Speicherfeder
- 26: Verriegelungseinrichtung
- 28: Pleuelkopf
- 30: Pleuelauge
- 32: Gelenkbolzen
- 34: Durchgangsbohrungen
- 35: Gabel
- 36: Bremshebel
- 38: Wangen
- 40: Gelenk
- 42: Spindelachse
- 44: Bolzenachse
- 46: Exzenterwelle
- 48: Zangenhebel
- 50: Zangenhebel
- 52: Bremszange
- 54: Belaghalter
- 56: Druckstangensteller
- 58: Scherkraftmeßbolzen
- 60: Meßaufnehmer
- 62: Querbohrungen
- 64: Auswerteelektronik
- 66: Bolzenkopf
- 68: Stoßebenen
- 70: Außennut
- 72: Anschlußverkabelung
- 74: Buchse
- 76: Buchse
- 78: Buchse
- 80: Randausnehmung
- 82: Randbereiche

## Patentansprüche

1. Bremszuspanneinrichtung (1), insbesondere für eine Schienenfahrzeugbremse, mit einem Bremsaktuator (2) zum Zuspannen und Lösen der Bremse und mit einem Kraftumsetzer (8) zur Umsetzung der vom Bremsaktuator (2) abgegebenen Energie in eine Bremszuspannbewegung, wobei der Kraftumsetzer (8) einen im Kraftfluß angeordneten, mit wenigstens einem Meßaufnehmer zur mittelbaren oder unmittelbaren Bremskraftmessung versehenen Scherkraftmeßbolzen (58) beinhaltet, welcher einen Durchgangsöffnungen (30, 34) von wenigstens zwei gegeneinander verschwenkbaren Kraftübertragungselementen (20, 36) des Kraftumsetzers (8) durchragenden Gelenkbolzen (32) eines Gelenks (40) bildet, **dadurch gekennzeichnet, daß** wenigstens einer Durchgangsöffnung (30, 34) eines Kraftübertragungselements (20, 36) und dem Scherkraftmeßbolzen (58) eine mit radial inneren Randausnehmungen (80) versehene Buchse (74, 76, 78) radial zwischengeordnet ist.

2. Bremszuspanneinrichtung nach Anspruch 1, **dadurch gekennzeichnet, daß** die Buchse (74, 76, 78) in der Durchgangsöffnung (30, 34) drehfest gehalten ist.

3. Bremszuspanneinrichtung nach Anspruch 2, **dadurch gekennzeichnet, daß** die Buchse (74, 76, 78) mit dem Scherkraftmeßbolzen (58) eine Gleitpaarung bildet und derart ausgebildet ist, daß sie im Hinblick auf Verschleißbedingungen wie Härte, Oberflächenrauhigkeit, Material etc. den eher zu Verschleiß neigenden Gleitpartner bildet.

4. Bremszuspanneinrichtung nach einem der vorhergehenden Ansprüche, **dadurch gekennzeichnet, daß** jeder Durchgangsöffnung (30, 34) eine Buchse (74, 76, 78) zugeordnet ist.

5. Bremszuspanneinrichtung nach Anspruch 4, **dadurch gekennzeichnet, daß** die Buchsen (74, 76, 78) im wesentlichen die gleiche axiale Länge wie die zugeordneten Durchgangsöffnungen (30, 34) aufweisen und radial innere Randausnehmungen (80) im Bereich von Stoßebenen (68) der Kraftübertragungselemente (20, 36) angeordnet sind.

6. Bremszuspanneinrichtung nach Anspruch 5, **dadurch gekennzeichnet, daß** die Meßaufnehmer (60) in Querbohrungen (62) oder in axialen Bohrungen des Scherkraftmeßbolzens (58) gehalten sind.

7. Bremszuspanneinrichtung nach Anspruch 6, **dadurch gekennzeichnet, daß** die Querbohrungen (62) im Bereich der Stoßebenen (68) der Kraftübertragungselemente (20, 36) angeordnet sind.

8. Bremszuspanneinrichtung nach einem der vorhergehenden Ansprüche, **dadurch gekennzeichnet, daß** das eine Kraftübertragungselement (20) ein eine Durchgangsöffnung bildendes Auge (30) und das andere Kraftübertragungselement (36) eine Gabel (35) mit das Auge (30) axial umgreifenden und je eine Durchgangsöffnung (34) aufweisenden Wangen (38) umfaßt.

9. Bremszuspanneinrichtung nach Anspruch 8, **dadurch gekennzeichnet, daß** das eine Kraftübertragungselement durch einen vom Bremsaktuator (2) betätigbaren Pleuel (20) und das andere Kraftübertragungselement durch einen Bremshebel (36) einer Bremszange (52) gebildet wird.

10. Bremszuspanneinrichtung nach einem der vorhergehenden Ansprüche, **dadurch gekennzeichnet, daß** ein tragender Bereich der radial äußeren Umfangsfläche des Scherkraftmeßbolzens (58) durch eine zylindrisch glatte Fläche gebildet wird.

11. Bremszuspanneinrichtung nach einem der vorhergehenden Ansprüche, **dadurch gekennzeichnet, daß** der Meßaufnehmer Dehnmeßstreifen, Kraftmeßzellen in Dünnfilmtechnik (60) oder Druckmeßelemente beinhaltet.

12. Bremszuspanneinrichtung nach einem der vorhergehenden Ansprüche, **dadurch gekennzeichnet, daß** der Scherkraftmeßbolzen (58) einen endseitigen, im Durchmesser vergrößerten Bolzenkopf (66) aufweist, in welchem eine Sensorsignal-Auswerteelektronik (64) aufgenommen ist.

13. Bremszuspanneinrichtung nach Anspruch 12, **dadurch gekennzeichnet, daß** der Meßaufnehmer (60), eine Anschlußverkabelung (72) für die Sensorsignal-Auswerteelektronik (64) sowie die Sensorsignal-Auswerteelektronik (64) jeweils redundant vorgesehen sind.

## Claims

1. A brake tensioning device (1), in particular for a rail vehicle brake, having a brake actuator (2) for tensioning and releasing the brake and having a power converter (8) for converting the energy provided by the brake actuator (2) into a brake tensioning movement, the power converter (8) containing a shearing force measuring bolt (58), located in the power transmission path and provided with at least one transducer for the indirect or direct measurement of the brake force, which forms a hinge bolt (32) of a hinge (40) which passes through open-ended openings (30, 34) in at least two power transmission elements (20, 36) in the power converter (8) which can be pivoted in relation to one another,
**characterised in that**
a bush (74, 76, 78) provided with radially inner edge recesses (80) is positioned radially between at least one open-ended opening (30, 34) in a power transmission element (20, 36) and the shearing force measuring bolt (58).

2. A brake tensioning device in accordance with claim 1,
**characterised in that**
the bush (74, 76, 78) is held in the open-ended opening (30, 34) in such a manner that it is unable to rotate.

3. A brake tensioning device in accordance with claim 2,
**characterised in that**
the bush (74, 76, 78) forms a sliding pair with the shearing force measuring pin (58) and is designed in such a manner that it is the part most likely to wear in respect of wear conditions such as hardness, surface roughness, material, etc.

4. A brake tensioning device in accordance with one of the preceding claims,
**characterised in that**
a bush (74, 76, 78) is assigned to each open-ended opening (30, 34).

5. A brake tensioning device in accordance with claim 4,
**characterised in that**
the bushes (74, 76, 78) are of essentially the same axial length as the assigned open-ended openings (30, 34), and radially inner edge recesses (80) are positioned in the area of planes of impact (68) of the power transmission elements (20, 36).

6. A brake tensioning device in accordance with claim 5,
**characterised in that**
the transducers (60) are held in transverse holes (62) or in axial holes in the shearing force measuring bolt (58).

7. A brake tensioning device in accordance with claim 6,
**characterised in that**
the transverse holes (62) are positioned in the area of the planes of impact (68) of the power transmission elements (20, 36).

8. A brake tensioning device in accordance with one of the preceding claims,
**characterised in that**
one power transmission element (20) comprises an eye (30) which forms an open-ended opening, while the other power transmission element (30) comprises cheeks (38) which axially encompass a fork (35) with the eye (30) and each of which have an open-ended opening (34).

9. A brake tensioning device in accordance with claim 8,
**characterised in that**
one power transmission element takes the form of a connecting rod (20) which can be actuated by the brake actuator (20), whilst the other power transmission element takes the form of a brake lever (36) of a brake calliper (52).

10. A brake tensioning device in accordance with one of the preceding claims,
**characterised in that**
a load-bearing area of the radially outer circumferential face of the shearing force measuring bolt (58) takes the form of a cylindrically smooth surface.

11. A brake tensioning device in accordance with one of the preceding claims,
**characterised in that**
the transducer contains wire strain gauges, thin film force measuring cells (60) or pressure measuring elements.

12. A brake tensioning device in accordance with one of the preceding claims,
**characterised in that**
at one end of the shearing force measuring bolt (58) is a bolt head (66) of greater diameter in which is received an electronic sensor signal evaluation device (64).

13. A brake tensioning device in accordance with claim 12,
**characterised in that**
the transducer (60), a connecting cable (72) for the electronic sensor signal evaluation device (64) and the electronic sensor signal evaluation device (64) are each provided in a redundant manner.

## Revendications

1. Dispositif (1) de serrage de frein, en particulier pour un frein de véhicule ferroviaire, comprenant un actionneur (2) de frein pour serrer et desserrer le frein et comprenant un convertisseur (8) de force pour transformer l'énergie délivrée par l'actionneur de frein (2) en un mouvement de serrage du frein, sachant que le convertisseur (8) de force comprend un axe (58) de mesure de force de cisaillement disposé dans le chemin de force et pourvu d'au moins un enregistreur de mesure pour la mesure directe ou indirecte de la force de freinage, axe qui constitue un axe d'articulation (32) d'une articulation (40) qui passe dans des ouvertures (30, 34) de passage d'au moins deux éléments (20, 36) de transmission de force, pouvant pivoter l'un par rapport à l'autre, du convertisseur (8) de force, **caractérisé en ce qu'**une douille (74, 76, 78) pourvue d'évidements (80) marginaux radialement intérieurs est disposée radialement entre au moins une ouverture (30, 34) de passage d'un élément (20, 36) de transmission de force et l'axe (58) de mesure de force de cisaillement.

2. Dispositif de serrage de frein suivant la revendication 1, **caractérisé en ce que** la douille (74, 76, 78) est maintenue bloquée en rotation dans l'ouverture (30, 34) de passage.

3. Dispositif de serrage de frein suivant la revendication 2, **caractérisé en ce que** la douille (74, 76, 78) forme un couple de glissement avec l'axe (58) de mesure de force de cisaillement et est conçue de telle sorte qu'en termes de conditions d'usure telles que dureté, rugosité de surface, matériau, etc., elle constitue le partenaire de glissement qui a tendance à s'user en premier.

4. Dispositif de serrage de frein suivant l'une des revendications précédentes, **caractérisé en ce qu'**une douille (74, 76, 78) est associée à chaque ouverture (30, 34) de passage.

5. Dispositif de serrage de frein suivant la revendication 4, **caractérisé en ce que** les douilles (74, 76, 78) possèdent sensiblement la même longueur axiale que les ouvertures (30, 34) de passage associées, et les évidements (80) marginaux radialement intérieurs sont disposés dans la région de plans (68) d'aboutement des éléments (20, 36) de transmission de force.

6. Dispositif de serrage de frein suivant la revendication 5, **caractérisé en ce que** les enregistreurs (60) de mesure sont maintenus dans des perçages (62) transversaux ou dans des perçages axiaux de l'axe (58) de mesure de force de cisaillement.

7. Dispositif de serrage de frein suivant la revendication 6, **caractérisé en ce que** les perçages (62) transversaux sont disposés dans la région des plans (68) d'aboutement des éléments (20, 36) de transmission de force.

8. Dispositif de serrage de frein suivant l'une des revendications précédentes, **caractérisé en ce que** l'un (20) des éléments de transmission de force comprend un oeillet (30) formant une ouverture de passage et l'autre élément (36) de transmission de force comprend une fourche (35) dotée de joues (38) s'engageant axialement autour de l'oeillet (36) et comportant chacune une ouverture (34) de passage.

9. Dispositif de serrage de frein suivant la revendication 8, **caractérisé en ce que** l'un des éléments de transmission de force est formé par une bielle (20) pouvant être actionnée par l'actionneur de frein (2) et l'autre élément de transmission de force est formé par un levier (36) de frein d'un étrier (52) de frein.

10. Dispositif de serrage de frein suivant l'une des revendications précédentes, **caractérisé en ce qu'**une région porteuse de la surface de pourtour radialement extérieur de l'axe (58) de mesure de force de cisaillement est formée par une surface cylindrique lisse.

11. Dispositif de serrage de frein suivant l'une des revendications précédentes, **caractérisé en ce que** l'enregistreur de mesure comprend des extensomètres à fil, des cellules (60) dynamométriques à couche mince ou des éléments de mesure de pression.

12. Dispositif de serrage de frein suivant l'une des revendications précédentes, **caractérisé en ce que** l'axe (58) de mesure de force de cisaillement comporte une tête (66) terminale de l'axe de diamètre agrandi, dans laquelle est reçue une unité (64) électronique d'exploitation de signal de capteur.

13. Dispositif de serrage de frein suivant la revendication 12, **caractérisé en ce que** l'enregistreur (60) de mesure, un câblage (72) de raccordement pour l'unité (64) électronique d'exploitation de signal de capteur ainsi que l'unité (64) électronique d'exploitation de signal de capteur sont respectivement prévus de façon redondante.
